# EUROPEAN PATENT APPLICATION

(11) **EP 1 207 729 A2**
(43) Date of publication of application: **22.05.2002**
(21) Application number: 01309649.0
(22) Date of filing: 15.11.2001
(51) Int. Cl.: H05K 3/36

(54) **Package and method to package and electrically connect a microdisplay**

(30) Priority: 17.11.2000 US 249839 P
(71) Applicant: Three-Five Systems, Inc., Tempe, AZ 85281-1230 (US)
(72) Inventor: Edwards, Nicoll Ryan, Phoenix, Arizona 85042 (US); Day, Kevin Kristopher, Phoenix, Arizona 85044 (US); Cardellino, Terri Ann, Chandler, Arizona 85226 (US)
(74) Representative: Pawlyn, Anthony Neil

(57) **Abstract**

The present invention provides a method and apparatus to package and electrically connect a microdisplay that includes a cavity package design. This cavity package design improves the packaging of the microdisplay by using a low number of parts, less processing, and is independent of the customer's interconnect. Structurally, the invention is a unified part, forming a cavity for insertion of a microdisplay cell. Additionally, the cavity package incorporates a variety of test features for ease of testing. Also, the cavity package is a small size and includes multiple mounting options allowing flexibility to customer changes and multiple configurations.

A cavity packaging system constructed in accordance with the invention has a total of five components including the cacity package, the FPC, the microdisplay cell, the adhesive, and the aperture frame. The cavity package has five parts, including the interconnect bar (402), the substrate (404), the plastic housing (406), the interconnect pins (408), and the shroud (410). The substrate (404) and interconnect bar (402) are insert molded into a plastic housing (406). Interconnect pins (408) are inserted into the resulting frame and protected by a plastic shroud (410) that fits over them.

## Description

### Field of the Invention

This invention applies to microdisplay technology, and more particularly to the packaging and electrical interconnect of a liquid crystal on silicon (LCoS) display.

### Background of the Invention

Microdisplay designers are seeking a compact, high information content display for visually interactive electronic devices to provide a reliable and profitable product. Generally, microdisplay designers are driven by a desire to minimize purchase and manufacturing costs. For instance, original equipment manufacturers (OEMs) want to pay the lowest price possible for a display and minimize their overhead. To provide this and simultaneously make a profit, suppliers need to optimize material costs, manufacturing processes, and the package design of the microdisplay.

Microdisplay designers and suppliers want the displays to function reliably, subject to manufacturing and environmental conditions. Suppliers want to verify display functionality quickly and easily. Customers need the displays to be easily integrated into their end product. Suppliers would like to provide one or a few displays to satisfy all applications. Therefore, each wants the display design to be flexible to many end products.

However, existing microdisplay designs suffer from several shortcomings. First, some existing designs suffer from a high part count, which increases cost. Second, some existing designs include large, customer-dependent gold plated flexes. Third, many existing lamination-based designs increase part and manufacturing costs. The lamination design compromises functionality, and the lack of test-specific features complicate functional verification. A microdisplay display package that is free of these problems has eluded those skilled in the art.

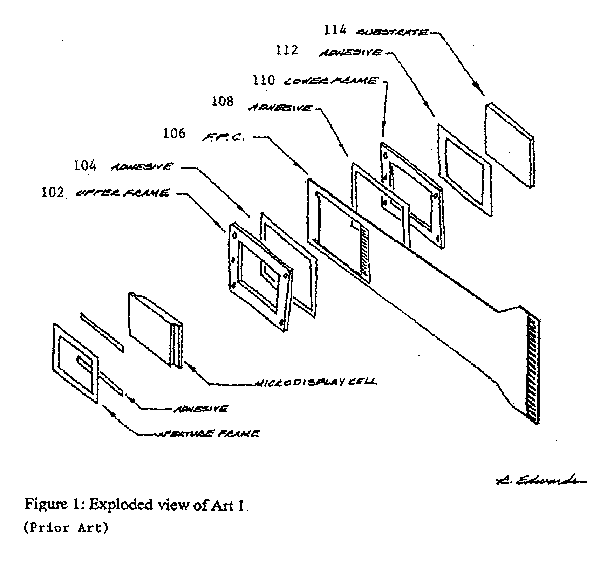

For example, FIGURE 1 shows an exploded view of an early microdisplay display package (Art 1). Art 1 has seven separate components of various materials. A two-layer gold plated flexible printed circuit (106)-FPC (flex) is laminated between two plastic frames (102 and 110). Laminating a ceramic substrate (114) to the back of plastic frame (110) completes the package. The microdisplay cell is attached to this substrate and connected electrically to FPC (106) through conductive epoxy and aluminum wire bonds. The open volume between the frame and microdisplay cell is encapsulated with RTV silicone and the inactive portion of the cell is masked with a thin metal aperture frame.

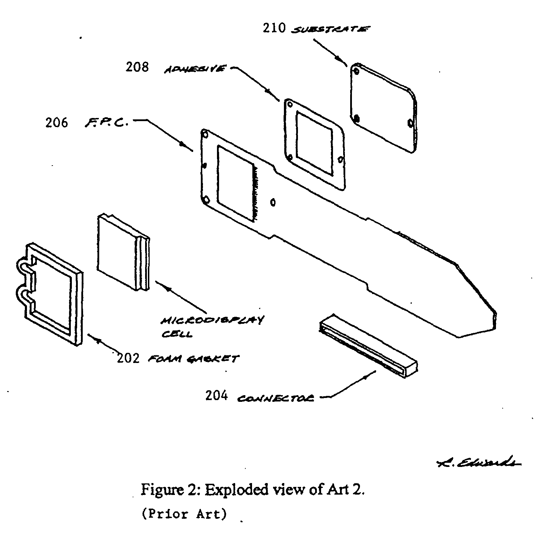

Illustrated in FIGURE 2 is an exploded view of another design of a microdisplay package (Art 2), which is similar to Art 1. This microdisplay package (Art 2) is also designed from a number of components of various materials. An adhesive backed urethane foam gasket (202) is attached to a two layer gold plated FPC (206). A ceramic substrate (210) is attached to the back of the FPC to complete the package. The microdisplay cell is then attached to the substrate. Electrical signals go to the microdisplay through wire bonds, a soldered metal slug, and the FPC mounted connector (204). The open volume between the foam gasket and the cell is encapsulated with an RTV silicone.

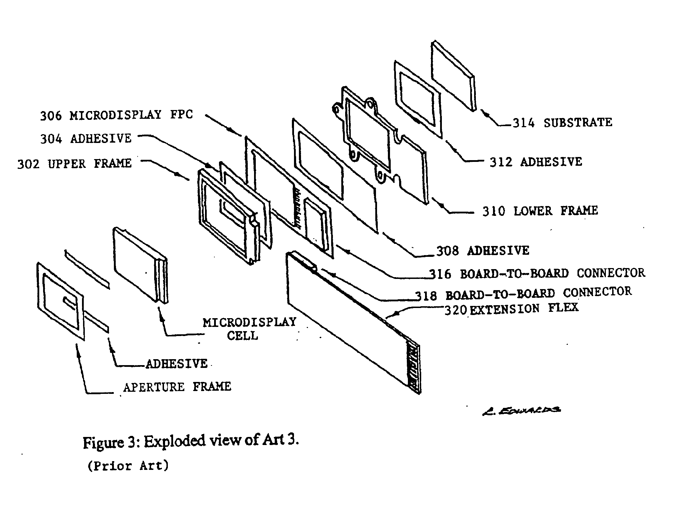

FIGURE 3 illustrates yet another microdisplay package (Art 3) which is similar to Art 1 but with two changes: the major components are redesigned and extension flex components are added. This adds three parts over those for Art 1 for a total of ten. (Compare Figure 1, Figure 2, and Figure 3). The height and width of the plastic frames (302) and (310) are reduced and mount loops are added. The FPC (306) is a single layer, gold plated design that does not incorporate the flexible "tails" of Art 1 and Art 2. Interconnect to the FPC is through a small, low profile board-to-board connector (316). This connector mates to its other half, which is mounted on another FPC. This FPC is supplied with Art 3 or comes from the OEMs' drive electronics.

The existing designs have several shortcomings. On the first issue of minimizing purchase and manufacturing costs, Art 1, 2 and 3 have several shortcomings. Art 1 and 3, for instance, have a greater part count than 2. Art 1 and Art 2's FPC is large compared to the size of the microdisplay, is two layer, is gold plated, and combines microdisplay and customer features on one part. The larger size means fewer parts per FPC panel, which results in more panels to process for a given number of flexes and increased manufacturing costs. The entire flex has two conductive layers where it is only necessary in the tail portion, resulting in additional processing costs. The gold plating is only desirable for the microdisplay interconnect; yet to avoid additional processing, the flex is gold plated all over. Gold is not necessary on the ZIF connection, so it adds material cost to the flex. An important disadvantage with these designs is that customer features are an integral aspect of the package design. If the customer changes to new connectors, the entire microdisplay may have to be redesigned.

Art 3 attempts to solve Art 1 and 2's FPC shortcomings by separating the large flex into two smaller ones. The microdisplay FPC (Art 3) is much smaller, single layer, gold plated, and microdisplay specific. The smaller size and single layer make processing easier and less expensive. Isolating this flex from the customer interface allows the supplier or customer to make changes independently without incurring immense retooling costs. The extension FPC (306) is also smaller, two layers, solder plated, and customer specific. The smaller size and solder plate make the flex less expensive. Customers can modify this flex as they want or completely incorporate it into their design. The disadvantage of Art 3 is that it adds three parts over Art 1: two board-to-board connectors (316 and 318) and an extension flex (320). Of course, these additional parts add cost.

Another cost incurred with Art 1 and Art 3 is the lamination-type design. There are seven components in this solution: two plastic frames, a substrate, an FPC, and three pieces of die cut adhesive. To assemble these components, the frame, PCB, and substrate position and press process must be done linearly. Also, the press process must be careful to avoid lamination problems like adhesive roll over, contamination, or incomplete press. Although the cost of lamination is reduced using an automated process, the number of parts involved, the numerous processes required, and the process complexity all work to increase the artifact's cost.

On the issue of functional reliably after exposure to manufacturing and operational environments, each of the existing microdisplay designs makes some compromises. Art 2's foam frame does not have the structural integrity that the plastic in Art 1 and Art 3 have. This makes it susceptible to handling failures during manufacture and assembly. As laminations Art 1 and 3 will always be susceptible to delaminating when exposed to extreme environments. Adhesive gaps or voids from incomplete press make the frame structurally weak. Also, the numerous press operations induce stresses in the components resulting in damaged flex and marred plastic features. Finally, note the engineers only minimized the CTE difference between microdisplay, frame, and substrate. The difference between microdisplay and adhesive is still relatively large. This increases the probability of defects induced by thermal expansion.

The existing microdisplay designs also have shortcomings resolving issue testability. The first drawback with Art 1 and Art 2 has been discussed. Using customer's features for testing requires a new fixture or test process every time the customer changes that feature. The design is improved by incorporating a robust, customer-independent feature. Art 3 does this with contact pads that can be easily probed.

There are two disadvantages to integrating the existing designs into the customer's end product. OEMs want the opportunity to change their designs at will quickly and easily. Art 1 and Art 2 include a customer feature in the their design, so a customer may require the design of Art 1 and Art 2 to change. Art 3 does not include a customer feature. A customer change may require Art 3's extension flex to change, but does not require other changes. The other shortcoming is that the designs are larger than necessary because their minimum size is determined by the adhesive width necessary for secure lamination and foam attach. In general, larger designs are more difficult for OEMs to fit into their products.

For these and other reasons, there remains a need in the art for an improved microdisplay package design.

### Summary of the Invention

The present invention provides a microdisplay design that includes the advantages that exist in the existing designs, but overcomes their shortcomings with a new cavity package design. This cavity design is less expensive than existing designs because it has fewer parts, requires less processing, and is independent of the customer's interconnect. Structurally, the invention is superior because it is a unified part, forming a cavity for insertion of a microdisplay cell, not a lamination. It incorporates robust test features so it is easier to test. Also, the small size and multiple mounting options offered by the cavity package of the inventive microdisplay design make it flexible to customer changes and multiple configurations.

In one aspect the invention is directed at a cavity package for receiving a microdisplay. The cavity package may be pre-assembled prior to receiving the microdisplay. The microdisplay may then be inserted into the cavity package. By pre-assembling the cavity package, each cavity package may be used with various microdisplays or other devices. The microdisplay need not be selected prior to assembling the cavity package. The packing system allows for interchangeability where various microdisplays may be packaged while minimizing the amount of post-assembly. The interchangeability associated with the cavity package allows for a greater range of utility after the cavity package has been assembled.

Alternatively, the cavity package can be utilized in conjunction with other light transmitting, reflecting, or sensing applications that require top exposure, such as an optical switch, MEMS applications, or other optical elements.

### Brief Description of the Drawings

FIGURE 1 shows an exploded view of an early microdisplay display package.
FIGURE 2 illustrates another early design of a microdisplay display package.
FIGURE 3 illustrates yet another early design of a microdisplay display package.
FIGURE 4 shows an exploded view of a cavity packaging system incorporating one embodiment of the invention.
FIGURE 5 illustrates in greater detail portions of the embodiment illustrated in FIGURE 4 in accordance with the invention.

### Detailed Description of the Invention

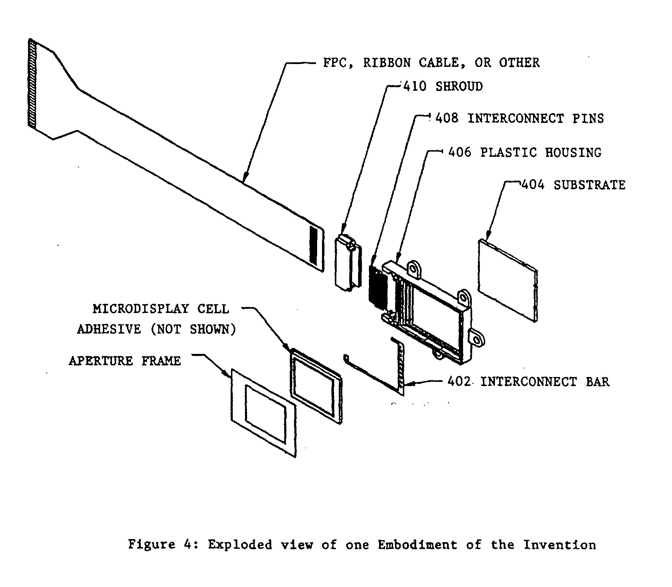

FIGURE 4 shows an exploded view of one embodiment of the invention. A cavity packaging system constructed in accordance with the invention has a total of five components including the cavity package, the FPC, the microdisplay cell, the adhesive, and the aperture frame. The cavity package has five parts, including the interconnect bar (402), the substrate (404), the plastic housing (406), the interconnect pins (408), and the shroud (410). The substrate (404) and interconnect bar (402) are insert molded into a plastic housing (406). Interconnect pins (408) are inserted into the resulting frame and protected by a plastic shroud (410) that fits over them.

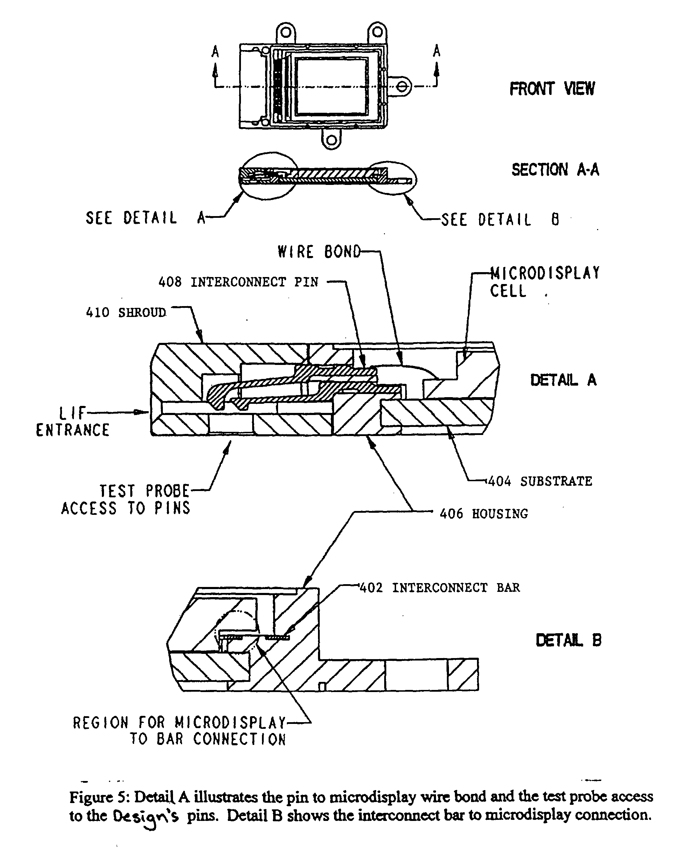

Note that the device is significantly different than the existing microdisplay designs. The total part count of the inventive design is one less than Art 1, one more than Art 2 and four less than Art 3. Instead of an FPC, the package connects to the microdisplay electrically through interconnect pins (408) and an L-shaped conductor, the interconnect bar (402), that are molded into the plastic frame (see Figure 5, Details A and B). The cavity package has no adhesives in its core construction, unlike the assemblies in Art 1 and 3. The cavity package is formed by a single plastic housing (406). The substrate (404) is molded into the cavity package, not laminated to it. Because the plastic is not laminated together, the overall width, and height of the inventive design are smaller than Art 1 and Art 3. Unlike Art 1 and 2, the device is not dependent on the interconnection device used by an outside source or customer. The shroud (410) serves to protect the interconnect pins and has holes to align test probes to pins (See FIGURE 5, Detail A).

The cavity package is pre-assembled prior to receiving the microdisplay. The microdisplay may then be inserted into the cavity package for use in various optical assemblies. The cavity package may be used with various microdisplays or other devices. Assembly required after the insertion of the microdisplay into the cavity package is therefore minimized. As previously stated the cavity package includes five primary components: an interconnect bar (402), a substrate (404), a plastic housing (406), interconnect pins (408), and a shroud (410). The interconnect bar (402) carries an electrical signal from an external source to the glass of the microdisplay module. Thus, the interconnect bar (402) has five potential properties: to be conductive, to be able to be insert molded into a plastic housing, to provide a suitable surface for the microdisplay cell-bar connection, and to be made of a material that minimizes the CTE difference between it and the housing. In this embodiment, the interconnect bar (402) connects the ITO of the microdisplay's glass to system ground with a conductive epoxy. The interconnect bar (402) is punched from 0.13-mm thick copper sheet then plated with 1.0 to 1.5 microns of gold over nickel. To minimize its effective CTE, nine holes are etched into the interconnect portion that rests under the microdisplay ledge. Variation of the interconnect bar (402) design can come from different interconnect techniques such a soldering, wire bonding, or other conductive adhesives; alternate forming methods; plating types; and bar shapes that are a function of CTE. However, the interconnect bar can be any conductive material and may be formed of one of a single monolith and multiple segments. Alternate designs of the cavity package may not include the interconnect bar (402) depending on the technology used for the microdisplay. If no crossover in the cell is performed internally, the interconnect bar (402) may not be needed. In addition, it is possible to use the interconnect bar (402) to electrically connect the ITO of the microdisplay's glass to a reference voltage rather than system ground.

The substrate (404) supports the mounting of the microdisplay. It is stiff and provides a flat surface for the microdisplay to mount against. The substrate (404) is also capable of being insert molded into a plastic housing. The substrate (404) is made from a material that minimizes the CTE difference between it and the microdisplay. In the described embodiment, the substrate (404) is made from 1mm thick, dry pressed and lapped AD-96 alumina. Other alternatives, such as hardened copper plate, nickel plastic, thick film fired ceramic, glass, and machined Alloy 42, can be specified according to the CTE necessary. It is appreciated that the substrate (404) may also be combined with other design features including, but not limited to, heat sinks, thermal coolers, or other backings that may be used in conjunction with the microdisplay cell.

The plastic housing (406) serves two functions. One of these is to hold the interconnect bar (402), substrate (404), and interconnect pins (408) with respect to the microdisplay cell. It also serves as the primary structural member of the cavity package, forming a protective box or cavity around the microdisplay cell. providing features for handling/assembly, and aligning the external source interconnect to the interconnect pins (408). The plastic housing (406) is geometrically compatible with the other components of the cavity package, the microdisplay cell, and external components from the external source. It is made from a material that minimizes the housing-microdisplay CTE difference and is compatible with mold-type processes. In one embodiment, the plastic housing (406) is sized to support the microdisplay, microdisplay assembly processes, and standard injection mold thicknesses. The four mount loops and two holes within the plastic housing (406) offer numerous mount options. It is molded using a glass filled liquid crystal polymer, Ticona's Vectra A150. The plastic housing's (406) geometry can be modified to fit the microdisplay, external source, and interconnect geometry that may be required. Also, the housing can be molded using any plastic resin or material that optimizes the design's moldability and CTE.

The interconnect pins (408) provide the primary driving signals from the external source to the silicon of the microdisplay module. They are conductive, wire bond compatible, insert process compatible, and designed to support the external source side of the interconnect. In one embodiment, the interconnect pins (408) are stamped from 0.20 thick copper plated with 1.0 to 1.5 microns of gold over nickel. The interconnect pin's (408) geometry resulted from cantilever beam bending theory to support the low insertion force interconnect. The interconnect pins (408) can be made from other conductive materials, can be plated differently, and can have the geometry modified according to the type of interconnect desired. Alternative types of interconnects include, but are not limited to, low insertion force, zero insertion force, header, surface mount, and through hole mount connections.

The purpose of the shroud (410) is to support the external source's interconnect and assist in the package's manufacture. It is compatible with the interconnect pins (408), the plastic housing (406), and external sources interconnect geometry. In one embodiment, the shroud (410) covers the interconnect pins (408) completely to protect them while handling, has an opening for flexible printed circuit insertion, and supports the pin load as the FPC engages them. In this configuration, the shroud (410) supports a low insertion force connection. It has openings directly under the interconnect pins (408) so test probes can access them directly without shroud (410) removal. Alternatively, openings may be placed in the plastic housing (406) directly under the interconnect pins (408) rather than in the shroud (410). In one embodiment, the shroud (410) is made from Vectra A150 resin. This component's design is flexible because the variety of possible external source needs. It can be modified, incorporated into the main housing, or omitted completely to support the interconnect desired. The material can be changed to meet external source's needs or improve moldability.

The final assembly of the microdisplay package involves inserting the microdisplay cell or liquid crystal on silicon (LCoS) display into the cavity package, rather than into a "sandwich" assembly associated with prior art microdisplay packages. Alternatively, the cavity package can be utilized in conjunction with other light emitting or sensing applications that require top exposure, such as an optical switch, MEMS applications, or other optical elements. When inserting the microdisplay cell into the cavity package, the microdisplay cell is attached to the substrate (404) and then connected electrically to the interconnect bar and pins with conductive epoxy and gold wire bonds. The open volume within the cavity package may be encapsulated with RTV silicone. The inactive portion of the microdisplay cell is masked with an aperture frame. The aperture frame is usually thin and can be formed from plastic, metal, a plastic film, or other material layered on glass. The aperture frame protects the microdisplay cell and enhances the cosmetic look of the package. OEMs interconnect to the microdisplay through a low insertion force connector (LIF) that is integrated into the plastic housing (406). They can do this using an FPC, ribbon cable connector, or even a thin printed circuit board (PCB).

Many aspects of the inventive design of the cavity package contribute to reduce its cost below those of the existing designs. Most notable is the number of parts, which is significantly less than prior designs. Large flexes are eliminated so cost issues associated with size, number of layers, and plating are gone. The inventive design utilizes interconnect pins (408) and interconnect bar (410), replacing the need for a previously used microdisplay flex, so a component cost is offset. Furthermore, the built-in LIF connector offsets the cost of using two board-to-board connectors and the solder processes to mount them. The inventive design's plastic housing (406) and shroud (410) replace the need for plastic frames and several lamination processes, so the cavity package becomes much less expensive. The inventive design is independent of the external source interface. This allows the display supplier to minimize costs by managing one or a few production configurations rather than one for each external source.

The inventive design suffers from none of the structural limitations that the existing designs do but maintains the advantages of their materials. The inventive design's plastic housing (406) is structurally more robust than previously used lamination designs. The inventive design's plastic housing (406), substrate (404), and interconnect bar (402) are molded as a single module, a cavity package, so lamination process problems are non-existent. The cavity package also improves upon the existing designs' thermal stress performance because the same low CTE difference materials are used without the high CTE difference adhesives.

FIGURE 5 illustrates in greater detail portions of the embodiment illustrated in FIGURE 4 in accordance with the invention. The present invention overcomes previous designs' limitations of testability, avoids external source dependence, and improves other design features. Unlike Art 1 and Art 2, discussed in the background of the invention, the inventive design's test features are external source independent. Also, the inventive design incorporates alignment features for fixtures and robust test features that can be probed. An additional improvement is that holes on the shroud (410) provide additional alignment features so pins can probe the ends of the interconnect pins (408). An array of probes can be inserted into these holes to test the display's function. This provides robust, self-aligning features to verify the inventive design's function.

The inventive design is easier to integrate into OEM's products than previous microdisplay designs. A non-external source specific microdisplay connection, like the inventive design's, allows all OEMs to easily modify their product. If a customer modifies the end that the microdisplay connects to, only a new FPC, ribbon cable, or other connector is required. These are much easier and cheaper to procure than new microdisplay packages. With respect to mounting the cavity package, the inventive design allows the mount ears to be removed if necessary for edge to edge mounting or additional clearance. Finally, the inventive design's cavity package is slightly smaller than the existing designs. This makes the inventive design a better candidate to incorporate in small form factor applications.

The above specification, examples and data provide a complete description of the manufacture and use of the composition of the invention. Since many embodiments of the invention can be made without departing from the spirit and scope of the invention, the invention resides in the claims hereinafter appended.

## Claims

1. An apparatus for packaging an optical element in a cavity, comprising:
an interconnect bar arranged to carry an electrical signal from an external source to the optical element;
a substrate arranged to support the optical element inserted into the cavity;
interconnect pins arranged to provide driving signals from the external source to the optical element; and
a housing arranged to hold the interconnect bar, the substrate, and the interconnect pins with respect to the optical element, wherein the housing forms the cavity around the optical element and assists in aligning the external source to the interconnect pins.

2. The apparatus of Claim 1, wherein the interconnect bar is arranged with holes that are made into an interconnect portion that rests under a ledge associated with the optical element, such that the effective CTE of the interconnect bar is minimized.

3. The apparatus of Claim 1, wherein the interconnect bar is made from a material that minimizes the CTE difference between the interconnect bar and optical element materials.

4. The apparatus of Claim 1, wherein the interconnect bar is a conductor that is comprised of one of a single monolith and multiple segments.

5. The apparatus of Claim 1, wherein the interconnect bar is a conductor plated with nickel-gold.

6. The apparatus of Claim 1, wherein the substrate is made from a material that minimizes the CTE difference between the substrate and the optical element.

7. The apparatus of Claim 1, wherein the interconnect pins are conductors plated with materials that enable electrical contact between the interconnect pins and the interconnect device.

8. The apparatus of Claim 1, further comprising a shroud arranged to support an interconnection between the external source and the interconnect pins.

9. The apparatus of Claim 8, wherein the shroud is arranged to cover the interconnect pins such that the interconnect pins are protected when the apparatus is handled and an interconnect device associated with an outside source is supported such that the interconnection is stable.

10. The apparatus of Claim 8, wherein the shroud is arranged to cover the interconnect pins such that the interconnect pins are protected when the apparatus is handled.

11. The apparatus of Claim 8, wherein the shroud is arranged with openings directly under the interconnect pins such that test probes can access the interconnect pins directly.

12. The apparatus of Claim 1, wherein the housing is arranged with openings directly under the interconnect pins such that test probes can access the interconnect pins directly.

13. The apparatus of Claim 1, wherein the interconnect pins are arranged in a manner consistent with one of a group including a low insertion force, zero insertion force, header, surface mount, and through hole mount connections that the interconnect device interfaces with to make electrical contact with the interconnect pins.

14. The apparatus of Claim 1, wherein the housing further includes mount loops and holes such that a variety of mounting options are provided.

15. The apparatus of Claim 1, wherein the housing includes features to be used for mounting the apparatus in an optical assembly.

16. The apparatus of Claim 1, wherein the housing, substrate, and interconnect bar are molded as a single module forming a cavity package, whereby lamination processes are avoided.

17. The apparatus of Claim 1, wherein the optical element is arranged to operate as one of a microdisplay cell, an optical switch, a MEMS device, and a liquid crystal on silicon (LCoS) display.

18. An apparatus arranged to display an image in response to an external source that is independent of a type that is associated with the external source, comprising:
a microdisplay, wherein the microdisplay is one of a microdisplay cell and a liquid crystal on silicon (LCoS) display;
an interconnect bar that is arranged to carry an electrical signal from the external source to a glass portion associated with the microdisplay;
a substrate that is affixed to the microdisplay once the microdisplay is inserted into the cavity, wherein the substrate is made from a material that minimizes the CTE difference between it and the microdisplay;
interconnect pins that arranged to provide driving signals from the external source to a silicon portion associated with the microdisplay;
a shroud that is arranged to structurally support an interconnection between the external source and the interconnect pins; and
a housing that is arranged to hold the interconnect bar, the substrate, and the interconnect pins with respect to the microdisplay, wherein the housing forms a cavity around the microdisplay and assists in aligning the external source to the interconnect pins.

19. The apparatus of Claim 18, wherein the housing, substrate, and interconnect bar are molded as a single module forming a cavity package, whereby lamination processes are avoided.

20. The apparatus of Claim 18, wherein the shroud is arranged to cover the interconnect pins such that the interconnect pins are protected when the apparatus is handled and an interconnect device associated with the external source is supported such that the interconnection is stable.

21. An apparatus arranged to display an image in response to an external source that is independent of a type that is associated with the external source, comprising:
a optical element arranged as one of a light sensing or a light emitting device;
an interconnect bar that is arranged to carry an electrical signal from the external source to the light-based module;
a substrate that is arranged to support the optical element;
interconnect pins that arranged to provide driving signals from the external source to the light-based module;
a shroud that is arranged to support an interconnection between the external source and the interconnect pins; and
a housing that is arranged to hold the interconnect bar, the substrate, and the interconnect pins with respect to the optical element, wherein the housing forms a cavity around the optical element and assists in aligning the external source to the interconnect pins.

22. The apparatus of Claim 21, wherein the housing, substrate, and interconnect bar are molded as a single module forming a cavity package, whereby lamination processes are avoided.

23. The apparatus of Claim 21, wherein the optical element is arranged to operate as one of a microdisplay cell, an optical switch, a MEMS device, and a liquid crystal on silicon (LCoS) display.

24. A method of constructing a light-based module that can be utilized by an outside source to one of sense and emit a light-based image, comprising:
producing an interconnect bar that is arranged to carry an electrical signal from the outside source to the light-based module;
producing a substrate that is arranged to support the light-based module;
producing interconnect pins that arranged to provide driving signals from the outside source to the light-based module;
producing a housing that is arranged to hold the interconnect bar, the substrate, and the interconnect pins with respect to a optical element;
molding the housing, substrate, and interconnect bar as a single module forming a cavity package, whereby lamination processes are avoided; and
inserting the optical element into the cavity package, such that the interconnect pins and the optical element are aligned to establish an interconnection between the light-based module and the outside source.

25. The method of Claim 24, further comprising encapsulating the open volume within the cavity package with RTV silicone.

26. The method of Claim 24, further comprising attaching an aperture frame to an inactive portion of the optical element.

27. The method of Claim 24, inserting the optical element further comprising inserting on of a microdisplay cell, an optical switch, a MEMS device, and a liquid crystal on silicon (LCoS) display.

28. An apparatus for packaging a optical element in a cavity such that the optical element in combination with the apparatus and an aperture frame form a light-based module for use by an external source, comprising:
a means for producing an interconnect bar, wherein the interconnect bar is arranged to carry an electrical signal from the external source to the light-based module;
a means for producing a substrate, wherein the substrate is arranged to support the optical element;
a means for producing interconnect pins, wherein the interconnect pins are arranged to provide driving signals from the external source to the light-based module;
a means for producing a housing, wherein the housing is arranged to hold the interconnect bar, the substrate, and the interconnect pins with respect to a optical element;
a means for molding the housing, substrate, and interconnect bar as a single module, wherein the single module forms a cavity package, whereby lamination processes are avoided; and
a means for inserting the optical element into the cavity package, wherein the cavity package aligns the interconnect pins and the optical element to establish an interconnection between the light-based module and the external source.

29. The apparatus of Claim 28, wherein the means for inserting the optical element into the cavity package further comprises means for inserting one of a microdisplay cell, an optical switch, a MEMS device, and a liquid crystal on silicon (LCoS) display into the cavity package.

30. The apparatus of Claim 28, further comprising means for encapsulating the open volume within the cavity package, wherein the open volume is encapsulated with RTV silicone.

31. The apparatus of Claim 28, further comprising means for attaching an aperture frame, wherein the aperture frame is attached to an inactive portion of the optical element.
